# EUROPEAN PATENT SPECIFICATION

(11) **EP 2 669 439 B1**
(45) Date of publication and mention of the grant of the patent: **24.12.2014**
(21) Application number: 12425100.0
(22) Date of filing: 29.05.2012
(51) Int. Cl.: E02F 3/36, A01G 23/00, B66C 3/16, H01R 39/64, H01R 4/02

(54) **Rotary joint for an electrohydraulic transmission**
Drehverbindung für eine elektrohydraulische Übertragung
Joint rotatif pour une transmission electrohydraulique

(43) Date of publication of application: 04.12.2013
(73) Proprietor: Bini Giorgio, 40043 Marzabotto (Province of Bologna) (IT)
(72) Inventor: Bini, Giorgio, 40043 Marzabotto (Bologna) (IT)
(74) Representative: Modiano, Micaela Nadia

(56) References cited:
- WO-A1-96/37930
- WO-A1-99/37136
- WO-A1-03/057615
- WO-A1-2012/067559
- DE-A1-102010 004 596
- JP-A- 2001 214 684
- US-A1- 2012 043 850

## Description

The present invention relates to a rotary joint, particularly for fluid-driven transmission.

Currently, various fields of technology frequently use connection elements known as joints, which are capable of establishing the connection between two elements and ensure at the same time the transmission of power, torque or others.

Among these, rotary joints, which are capable of providing the rotary coupling between the two elements to be connected, are certainly widespread. In greater detail, one of the numerous applications in which rotary joints are used is in work machines such as cranes, excavators, et cetera, which comprise a drive unit which controls the movements of a mechanical arm, capable of performing the functions to which the machine is assigned.

Typically, the transmission of power from the drive unit to the mechanical arm is usually entrusted to a hydraulic circuit, which comprises therefore also a rotary joint, which is necessary to provide the rotary connection between the drive unit and the arm.

Usually, these joints have a box-like shell, which constitutes the rotor and therefore can rotate around an axially symmetrical body, the stator, which is accommodated inside the shell and is associated with the drive unit. Due to a suitable arrangement of internal channels, the stator and the rotor can ensure the circulation of the transfer fluid, and therefore the desired power transmission.

Moreover, indeed to allow the actuation and control of the mechanical arm, frequently such joints must be equipped with additional components, in order to ensure the electrical connection between the drive unit and the arm.

This result is usually obtained by providing an electric collector and the other components that ensure the electrical connection between the stator and the rotor outside the shell, which constitutes, as observed, the rotor itself (and in turn accommodates the stator).

WO-A-9937136 discloses a rotary link for a multifunction head having this type of construction, with the collector and the remaining electrical components arranged outside the shell of the joint.

Such constructive solution, however, is not free from drawbacks.

The choice to arrange the collector and the remaining electrical components outside the shell of the joint inevitably exposes these elements to the external environment, causing conditions of potential danger to the point of rendering the joint unable to comply with safety standards.

In fact, it is evident that if the joint makes contact with water, sparks, gases, etcetera, the risk of breakdowns, short-circuits, fires and explosions is high.

This risk is obviously even more felt when the joint is to be used in potentially dangerous environments (as occurs with excavators and cranes designed to operate in tunnels, mines, et cetera), rendering the joint in practice unusable.

The aim of the present invention is to solve the above mentioned problems, by providing a rotary joint capable of ensuring the electrical connection between the stator and the rotor.

Within this aim, an object of the invention is to provide a rotary joint that ensures the electrical connection between the stator and the rotor safely, without risk of breakdown, short-circuit and the like.

A further object of the invention is to provide a rotary joint that allows electrical connection between the stator and the rotor safely and without any risks even in potentially dangerous work environments.

A further object of the invention is to provide a rotary joint that ensures high reliability in operation and is capable of meeting safety standards.

Another object of the invention is to provide a rotary joint that can be obtained easily starting from commonly commercially available elements and materials.

Yet another object of the invention is to provide a rotary joint that has modest costs and is safe to apply.

In accordance with the invention, there is provide a rotary joint according to claim 1. Preferred embodiments are defined in the dependent claims.

Further characteristics and advantages of the invention will become better apparent from the description of a preferred but not exclusive embodiment of the rotary joint according to the invention, illustrated by way of non-limiting example in the accompanying drawings, wherein:

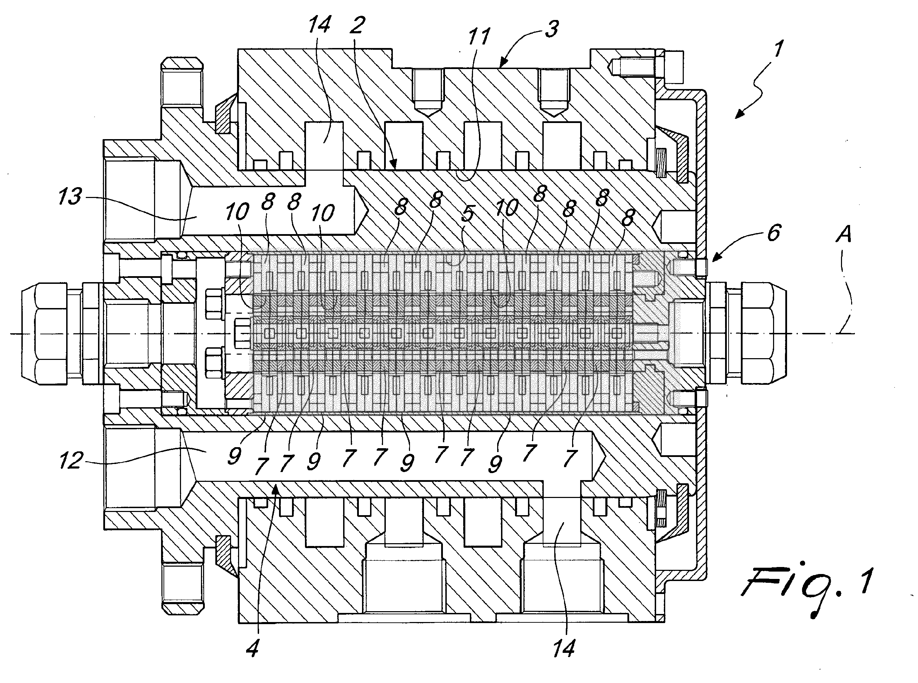

Figure 1 is a sectional view of the rotary joint according to the invention, taken along a plane that passes through its axis of symmetry;
Figure 2 is a view of a detail of Figure 1 of the auxiliary body;
Figure 3 is a front elevation view of the rotary joint according to the invention.

With reference to the figures, a rotary joint according to the invention, generally designated by the reference numeral 1, is particularly suitable for fluid-driven transmission, with which it is therefore possible to entrust to a fluid the task of transmitting motion, power, torque or others from a drive unit to a driven element, ensuring at the same time that the driven element can rotate, with respect to the drive unit, about a rotation axis A.

In greater detail, the rotary joint 1 comprises a main body, which can be arranged between the drive unit and the driven element, which in turn is provided with a first stator half-joint 2, which can be rigidly associated with the drive unit (according to fixing methods which can even be of a known type). Moreover, the main body is provided with a second rotor half-joint 3, which is engaged rotatably with the first half-joint 2, about the rotation axis A, and that can be coupled rigidly (again, according to fixing methods which can even be of a known type), to the driven element.

It is useful to specify right now that according to the preferred application, which will be referenced in the continuation of the description, the fluid entrusted with the task of transferring power and motion is oil for transmissions, and the rotary joint 1 is installed on work machines such as cranes, excavators, et cetera. In this application, therefore, the rotary joint 1 allows the rotation (controlled hydraulically) of a driven element constituted by a mechanical arm or a bucket (or similar device) with respect to the drive unit, which typically comprises a chassis (provided with a driving and control post for a user), which accommodates a fluid-driven motor and is possibly provided with wheels, tracks or other means of movement.

In any case, it is useful to specify right now that the possibility to adopt the rotary joint 1 according to the invention in different types of application (and for different fluids), without thereby abandoning the protective scope claimed herein, is not excluded.

The first half-joint 2 and the second half-joint 3 are crossed by respective branches of a channel system 4, which can be crossed by the fluid. The branches are kept mutually facing at any mutual angular position of the half-joints 2, 3, so as to ensure the desired fluid-driven connection between the drive unit and the driven element (one possible method for providing the branches will be proposed merely by way of example in the pages that follow).

According to the invention, the main body has an internal cavity 5, which is extended along the rotation axis A; the cavity 5 accommodates an auxiliary body 6, which comprises at least one first electrical stator connector 7, which is integrally coupled to the first half-joint 2 and is electrically connected to the drive unit (according to methods which can also be of a known type). Moreover, the cavity 5 accommodates at least one second rotor connector 8, which is electrically connected to the driven element (again, according to methods which can also be of a known type), and the second connector 8 is integrally coupled to the second half-joint 3 and can rotate about the rotation axis A.

The connectors 7, 8 are mutually kept electrically associated at any mutual angular position of the half-joints 2, 3 in order to ensure the electrical connection between the drive unit and the driven element, achieving in practice the intended aim.

More specifically, the first connector 7 and the second connector 8 have respective surface portions which are kept in mutual contact, at any mutual angular position of the half-joints 2, 3 for the electrical sliding connection between the connectors 7, 8 and consequently between the drive unit and the driven element.

The sliding contact may be obtained according to various methods, also of a known type, all of which are within the protective scope claimed herein, and for example can be provided by means of a connection with brushes or the like.

According to a constructive solution of substantial practical interest, cited by way of non-limiting example of the application of the invention, the auxiliary body 6 comprises a plurality of first connectors 7, integrally coupled to the first half-joint 2 and electrically connected to the drive unit. Moreover, the auxiliary body 6 comprises a plurality of second connectors 8, in turn integrally coupled to the second half-joint 3 and electrically connected to the driven element.

Each first connector 7 is therefore kept in sliding contact with the respective second connector 8, at any mutual angular position of the half joints 2, 3, for the electrical connection between the drive unit and the driven element.

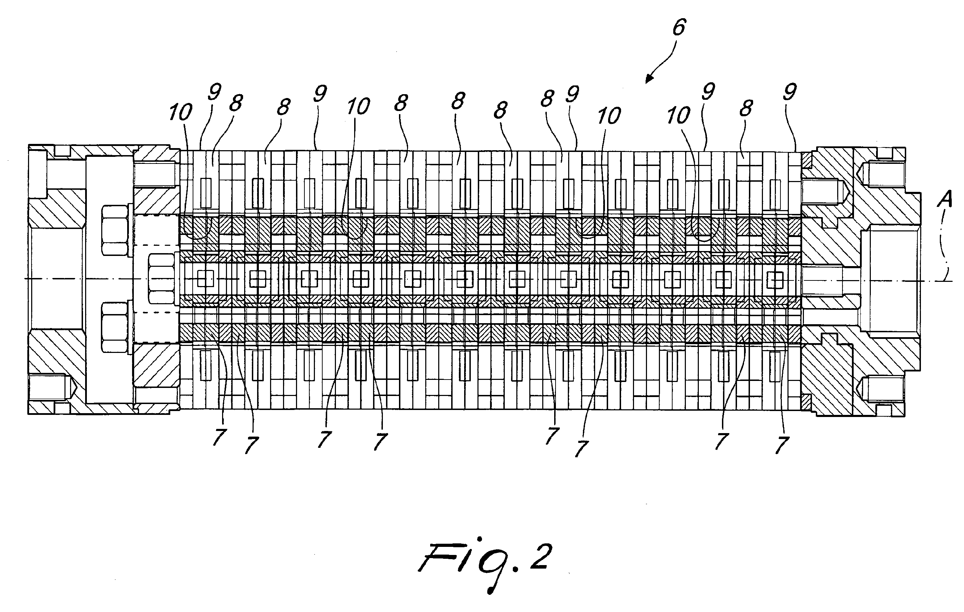

With reference to the preferred but not exclusive constructive solution, illustrated in the accompanying figures, each first connector 7 is substantially constituted by a disk-shaped block. The first disk-shaped connectors 7 are stacked, as can be deduced in particular in Figure 2, to define substantially a first connection assembly which is substantially cylindrical and is arranged along the rotation axis A inside the already-cited cavity 5.

With further reference to the preferred constructive solution, each second connector 8 is substantially disk-shaped. The second substantially disk-like connectors 8 are also stacked, for the substantial definition of a second connection assembly, and have respective mutually aligned axial holes to accommodate the first connection assembly.

In order to ensure the rigid coupling to the second half-joint 3, the outer walls 9 of each second connector 8 are rigidly coupled to the inner surface of the cavity 5. Moreover, in order to ensure the desired electrical connection between the drive unit and the driven element, as a consequence of any rotation of the second half-joint 3 with respect to the first half-joint 2, the inner walls 10 of each hole of the second connectors 8 can slide around the outer surface of the respective first connector 7.

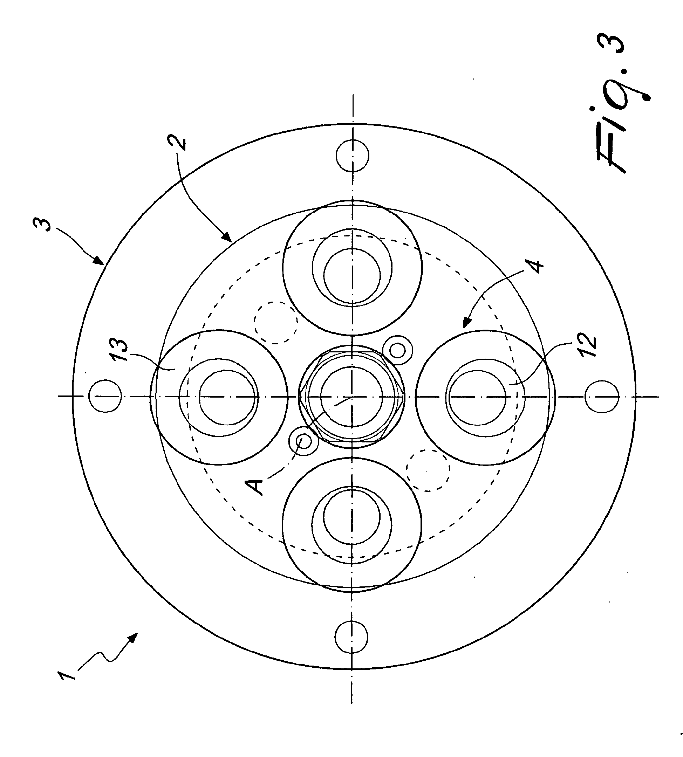

According to a possible embodiment, as can be deduced in particular from Figure 3, the first half-joint 2 and the second half-joint 3 have a substantially cylindrical shape: the second half-joint 3 is provided with an axial duct 11, which accommodates coaxially the first half-joint 2, which is therefore arranged in contact, at its sides, with the lateral surface of the duct 11.

Therefore, it is the first half-joint 2 that is provided internally with the cavity 5, which in turn accommodates the auxiliary body 6, which is arranged coaxially to the half-joints 2, 3.

During a rotation of the driven element with respect to the drive unit, about the rotation axis A, the second half-joint 3 can rotate around the first half-joint 2 (so that the lateral surface of the duct 11, during the rotation, slides along the sides of the first half-joint 2).

Conveniently, the channel system 4, which can be crossed by the fluid (as already noted, preferably chosen of the type of transmission oil), comprises at least one delivery portion 12 and at least one return portion 13, which are provided along directions which are parallel to the rotation axis, inside the first half-joint 2, and are connected to the drive unit.

On opposite sides with respect to the opening connected to the drive unit, each portion 12, 13 faces a respective circumferential groove 14, which is provided along the lateral surface of the duct 11 and is connected to the driven element, at any mutual angular position of the half-joints 2, 3, in order to ensure the fluid-driven connection between the half-joints 2, 3 and between the drive unit and the driven element.

The operation of the rotary joint is therefore evident from what has been described so far: a fluid (for example oil) capable of conveying and transmitting energy, motion, power, et cetera from a drive unit to a driven element which rotates with respect to the drive unit can flow inside the channel system 4. Transmission is ensured at any rotation (and at any angular position) of the second half-joint 3 (integrally coupled to the driven element), with respect to the first half-joint 2 (rigidly coupled to the drive unit), due to the arrangement of the branches of the channel system 4.

As noted, in fact, the portions 12, 13 provided in the first half-joint 2 are constantly connected to the grooves 14, as a consequence of any rotation of the second half-joint 3, ensuring the correct transmission of the fluid.

Inside the main body, which comprises the half-joints 2, 3, electrical connection also occurs between the first connectors 7, associated with the first half-joint 2 and with the drive unit, and the second connectors 8, associated with the second half-joint 3 and with the driven element.

As described in the previous pages, as a consequence of any rotation of the second half-joint 3 with respect to the first half-joint 2, the electrical sliding connection between the connectors 7, 8 (arranged coaxially to the half-joints 2, 3) is maintained.

The driven element is thus constantly kept electrically connected to the drive unit. Moreover, the choice to arrange the connectors 7, 8 inside the cavity 5, which is inside the main body (and the half-joints 2, 3), makes the rotary joint 1 safe and adapted to operate in any working condition and for any application.

The electrical components (such as indeed the connectors 7, 8) are in fact protected inside the cavity 5 of the main body and are not exposed to the external environment, where instead dust, water, gases, sparks et cetera might cause breakdowns, short-circuits, explosions and the like.

The rotary joint 1 according to the invention can therefore meet the safety standards of reference and can be used in potentially dangerous work environments, such as tunnels, mines, et cetera, without any risk of fire or explosions.

In practice it has been found that the rotary joint according to the invention fully achieves the intended aim, since the connectors which are arranged inside a cavity provided in the main body and are kept electrically associated at any mutual angular position of the half-joints associated respectively with the drive unit and the driven element, ensure the electrical connection between the latter.

The invention thus conceived is susceptible of numerous modifications and variations, all of which are within the scope of the appended claims. All the details may furthermore be replaced with other technically equivalent elements.

In the exemplary embodiments shown, individual characteristics, given in relation to specific examples, may actually be interchanged with other different characteristics that exist in other exemplary embodiments.

In practice, the materials used, as well as the dimensions, may be any according torequirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A rotary joint, particularly for fluid-driven transmission, comprising a main body, which can be arranged between a drive unit and a driven element, provided with the possibility to rotate, with respect to the drive unit, about a rotation axis (A), said main body being provided with a first stator half-joint (2), rigidly associable with the drive unit, and a second rotor half-joint (3), which is engaged with said first stator half-joint (2) so that it can rotate about the rotation axis (A) and can be coupled rigidly to the driven element, said first stator half-joint (2) and said second rotor half-joint (3) being crossed by respective branches of a channel system (4) that can be crossed by a fluid, said branches being kept mutually facing at any mutual angular position of said first and second half-joints (2, 3), for the fluid-driven connection between the drive unit and the driven element, **characterized in that** said first stator half-joint (2) has an internal cavity (5) that extends along the rotation axis (A), said cavity (5) accommodating an auxiliary body (6) which comprises at least one first electric stator connector (7), rigidly coupled to said first half-joint (2) and electrically connectable to the drive unit, and at least one second rotor connector (8), which is electrically connectable to the driven element, said second rotor connector (8) being rigidly coupled to said second rotor half-joint (3) and rotating about the rotation axis (A), said first and second connectors (7, 8) being kept mutually electrically associated at any mutual angular position of said first and second half-joints (2, 3), for the electrical connection between the drive unit and the driven element.

2. The rotary joint according to claim 1, **characterized in that** said first connector (7) and said second connector (8) have respective surface portions kept in mutual contact, at any mutual angular position of said half-joints (2, 3), for the electric sliding connection between said connectors (7, 8), and between the drive unit and the driven element.

3. The rotary joint according to claims 1 and 2, **characterized in that** said auxiliary body (6) comprises a plurality of first connectors (7), integrally coupled to said first half-joint (2) and electrically connected to the drive unit, and a plurality of second connectors (8), integrally coupled to said second half-joint (3) and electrically connected to the driven element, each one of said first connectors (7) being kept in sliding contact with a respective second connector (8), at any mutual angular position of said half-joints (2, 3), for the electrical connection between the drive unit and the driven element.

4. The rotary joint according to one or more of the preceding claims, **characterized in that** each one of said first connectors (7) is substantially constituted by a disk-shaped block, said first disk-shaped connectors (7) being stacked to substantially define a first substantially cylindrical connection assembly, arranged along the rotation axis (A) inside said cavity (5).

5. The rotary joint according to one or more of the preceding claims, **characterized in that** each one of said second connectors (8) is substantially disk-shaped, said second substantially disk-shaped connectors (8) being stacked for the substantial definition of a second connection assembly and having respective axial holes which are mutually aligned in order to accommodate said first connection assembly, the outer walls (9) of each one of said second connectors (8) being rigidly coupled to the inner surface of said cavity (5), following a rotation of said second half-joint (3) with respect to said first half-joint (2), the inner walls (10) of each one of said holes sliding around the outer surface of the respective first connector (7) for electrical connection between the drive unit and the driven element.

6. The rotary joint according to one or more of the preceding claims, **characterized in that** said first half-joint (2) and said second half-joint (3) are substantially cylindrical, said second half-joint (3) being provided with an axial duct (11) for accommodating coaxially said first half-joint (2) which is arranged in contact with the lateral surface of said duct (11), said first half-joint (2) being provided internally with said cavity (5) for accommodating said auxiliary body (6) during a rotation of the driven element with respect to the drive unit, about the rotation axis (A), said second half-joint (3) rotating around said first half-joint (2).

7. The rotary joint according to one or more of the preceding claims, **characterized in that** said channel system (4) that can be crossed by a fluid, preferably chosen of the type of transmission oil, comprises at least one delivery portion (12) and at least one return portion (13), which are provided along directions which are parallel to said rotation axis (A), inside said first half-joint (2), and are connected to the drive unit, on opposite sides each one of said portions (12, 13) facing a respective circumferential groove (14) provided along the lateral surface of said duct (11), which is connected to the driven element, at any mutual angular position of said half-joints (2, 3), for the fluid-driven connection between said half-joints (2, 3) and between the drive unit and the driven element.

## Patentansprüche

1. Eine Drehverbindung, insbesondere für fluidgetriebene Übertragung, die einen Hauptkörper umfasst, der zwischen einer Antriebseinheit und einem angetriebenen Element angeordnet werden kann, versehen mit der Möglichkeit, sich, mit Bezug auf die Antriebseinheit, um eine Drehachse (A) zu drehen, wobei der Hauptkörper mit einer ersten Stator-Kupplungshälfte (2) ausgestattet ist, die starr mit der Antriebseinheit verbunden werden kann, und einer zweiten Rotor- Kupplungshälfte (3), die so in die erste Stator- Kupplungshälfte (2) eingreift, dass sie sich um die Drehachse (A) drehen und starr mit dem angetriebenen Element gekoppelt werden kann, wobei die erste Stator-Kupplungshälfte (2) und die zweite Rotor- Kupplungshälfte (3) von entsprechenden Ästen eines Kanalsystems (4) durchquert werden, die von einem Fluid durchquert werden können, wobei die Äste einander zugewandt in einer beliebigen Winkelposition der ersten und zweiten Kupplungshälften (2, 3) zueinander gehalten werden, für die fluidgetriebene Verbindung zwischen der Antriebseinheit und dem angetriebenen Element, **dadurch gekennzeichnet, dass** die erste Stator- Kupplungshälfte (2) einen inneren Hohlraum (5) hat, der sich entlang der Drehachse (A) erstreckt, wobei der Hohlraum (5) einen Hilfskörper (6) enthält, welcher mindestens ein erstes elektrisches Stator-Verbindungsstück (7) umfasst, starr gekoppelt mit der ersten Kupplungshälfte (2) und in der Lage, mit der Antriebseinheit elektrisch verbunden zu werden, und mindestens ein zweites Rotor-Verbindungsstück (8), das mit dem angetriebenen Element elektrisch verbunden werden kann, wobei das zweite Rotor-Verbindungsstück (8) starr mit der zweiten Rotor-Kupplungshälfte (3) gekoppelt ist und sich um die Drehachse (A) dreht, wobei die ersten und zweiten Verbindungsstücke (7, 8) zur elektrischen Verbindung zwischen der Antriebseinheit und dem angetriebenen Element in einer beliebigen Winkelposition der ersten und zweiten Kupplungshälften (2, 3) zueinander elektrisch miteinander verbunden gehalten werden.

2. Die Drehverbindung gemäß Anspruch 1, **dadurch gekennzeichnet, dass** das erste Verbindungsstück (7) und das zweite Verbindungsstück (8) entsprechende Oberflächenabschnitte haben, die in einer beliebigen Winkelposition der Kupplungshälften (2, 3) zueinander in gegenseitigem Kontakt gehalten werden, zum Zwecke der elektrischen gleitenden Verbindung zwischen den Verbindungsstücken (7, 8) und zwischen der Antriebseinheit und dem angetriebenen Element.

3. Die Drehverbindung gemäß Anspruch 1 und 2, **dadurch gekennzeichnet, dass** der Hilfskörper (6) eine Vielzahl von ersten Verbindungsstücken (7) umfasst, fest gekoppelt mit der ersten Kupplungshälfte (2) und elektrisch verbunden mit der Antriebseinheit, und eine Vielzahl von zweiten Verbindungsstücken (8), fest gekoppelt mit der zweiten Kupplungshälfte (3) und elektrisch verbunden mit dem angetriebenen Element, wobei jedes der ersten Verbindungsstücke (7) zur elektrischen Verbindung zwischen der Antriebseinheit und dem angetriebenen Element in einer beliebigen Winkelposition der Kupplungshälften (2, 3) in gleitenden Kontakt mit einem entsprechenden zweiten Verbindungsstück (8) gehalten wird.

4. Die Drehverbindung gemäß einem oder mehreren der obigen Ansprüche, **dadurch gekennzeichnet, dass** jedes der ersten Verbindungsstücke (7) im Wesentlichen aus einem scheibenförmigen Block besteht, wobei die ersten scheibenförmigen Verbindungsstücke (7) gestapelt sind, um im Wesentlichen einen ersten im Wesentlichen zylindrischen Verbindungsaufbau zu bestimmen, der angeordnet ist entlang der Drehachse (A) innerhalb des Hohlraums (5) .

5. Die Drehverbindung gemäß einem oder mehreren der obigen Ansprüche, **dadurch gekennzeichnet, dass** jedes der zweiten Verbindungsstücke (8) im Wesentlichen scheibenförmig ist, wobei die zweiten im Wesentlichen scheibenförmigen Verbindungsstücke (8) für die substantielle Bestimmung eines zweiten Verbindungsaufbaus gestapelt sind und entsprechende axiale Löcher haben, die miteinander ausgerichtet sind, um den ersten Verbindungsaufbau aufzunehmen, wobei die Außenwände (9) jedes der zweiten Verbindungsstücke (8) starr mit der inneren Oberfläche des Hohlraums (5) gekoppelt sind, wobei nach einer Drehung der zweiten Kupplungshälfte (3) im Verhältnis zu der ersten Kupplungshälfte (2) die Innenwände (10) jedes der Löcher zum Zwecke elektrischer Verbindung zwischen der Antriebseinheit und dem angetriebenen Element um die äußere Oberfläche des entsprechenden ersten Verbindungsstücks (7) herum gleiten.

6. Die Drehverbindung gemäß einem oder mehreren der obigen Ansprüche, **dadurch gekennzeichnet, dass** die erste Kupplungshälfte (2) und die zweite Kupplungshälfte (3) im Wesentlichen zylindrisch sind, wobei die zweite Kupplungshälfte (3) mit einem axialen Gang (11) ausgestattet ist, um die erste Kupplungshälfte (2) koaxial aufzunehmen, die in Kontakt mit der seitlichen Oberfläche des Ganges (11) angeordnet ist, wobei die erste Kupplungshälfte (2) innen mit dem Hohlraum (5) versehen ist, um den Hilfskörper (6) während einer Drehung des angetriebenen Elements im Verhältnis zu der Antriebseinheit um die Drehachse (A) aufzunehmen, wobei die zweite Kupplungshälfte (3) sich um die erste Kupplungshälfte (2) dreht.

7. Die Drehverbindung gemäß einem oder mehreren der obigen Ansprüche, **dadurch gekennzeichnet, dass** das Kanalsystem (4), das von einem Fluid, vorzugsweise von der Art von Getriebeöl, durchquert werden kann, mindestens einen Abgabeabschnitt (12) und mindestens einen Rücklaufabschnitt (13) umfasst, die entlang von Richtungen, die parallel zu der Drehachse (A) sind, innerhalb der ersten Kupplungshälfte (2) bereitgestellt sind und mit der Antriebseinheit verbunden sind, wobei jeder der Abschnitte (12, 13) auf gegenüberliegenden Seiten einer entsprechenden umlaufenden Kerbe (14) zugewandt ist, die entlang der seitlichen Oberfläche des Ganges (11) bereitgestellt ist, der mit dem angetriebenen Element verbunden ist, in einer beliebigen Winkelposition der Kupplungshälften (2, 3) zueinander, zur fluidgetriebenen Verbindung zwischen den Kupplungshälften (2, 3) und zwischen der Antriebseinheit und dem angetriebenen Element.

## Revendications

1. Joint rotatif, en particulier pour une transmission hydraulique, comprenant un corps principal, qui peut être agencé entre une unité d'entraînement et un élément entraîné, ayant la possibilité de tourner, par rapport à l'unité d'entraînement, autour d'un axe de rotation (A), ledit corps principal étant pourvu d'un premier demi-joint de stator (2), pouvant être associé rigidement à l'unité d'entraînement, et d'un deuxième demi-joint de rotor (3), qui est en prise avec ledit premier demi-joint de stator (2) de sorte qu'il peut tourner autour de l'axe de rotation (A) et qu'il peut être accouplé rigidement à l'élément entraîné, ledit premier demi-joint de stator (2) et ledit deuxième demi-joint de rotor (3) étant traversés par des branches respectives d'un système de canaux (4) qui peut être traversé par un fluide, lesdites branches étant maintenues mutuellement en vis-à-vis à n'importe quelle position angulaire mutuelle desdits premier et deuxième demi-joints (2, 3), pour la liaison hydraulique entre l'unité d'entrainement et l'élément entraîné, **caractérisé en ce que** ledit premier demi-joint de stator (2) comporte une cavité interne (5) qui s'étend le long de l'axe de rotation (A), ladite cavité (5) logeant un corps auxiliaire (6) qui comprend au moins un premier connecteur électrique de stator (7), accouplé rigidement au dit premier demi-joint (2) et pouvant être connecté électriquement à l'unité d'entraînement, et au moins un deuxième connecteur de rotor (8), qui peut être connecté électriquement à l'élément entraîné, ledit deuxième connecteur de rotor (8) étant accouplé rigidement au dit deuxième demi-joint de rotor (3) et tournant autour de l'axe de rotation (A), lesdits premier et deuxième connecteurs (7, 8) étant maintenus mutuellement associés électriquement à n'importe quelle position angulaire mutuelle desdits premier et deuxième demi-joints (2, 3), pour la connexion électrique entre l'unité d'entraînement et l'élément entraîné.

2. Joint rotatif selon la revendication 1, **caractérisé en ce que** ledit premier connecteur (7) et ledit deuxième connecteur (8) ont des parties de surface respectives maintenues en contact mutuel, à n'importe quelle position angulaire mutuelle desdits demi-joints (2, 3), pour la connexion électrique coulissante entre lesdits connecteurs (7, 8), et entre l'unité d'entraînement et l'élément entraîné.

3. Joint rotatif selon les revendications 1 et 2, **caractérisé en ce que** ledit corps auxiliaire (6) comprend une pluralité de premiers connecteurs (7), accouplés intégralement au dit premier demi-joint (2) et connectés électriquement à l'unité d'entraînement, et une pluralité de deuxièmes connecteurs (8), accouplés intégralement au dit deuxième demi-joint (3) et connectés électriquement à l'élément entraîné, chacun desdits premiers connecteurs (7) étant maintenu en contact coulissant avec un deuxième connecteur (8) respectif, à n'importe quelle position angulaire mutuelle desdits demi-joints (2, 3), pour la connexion électrique entre l'unité d'entraînement et l'élément entraîné.

4. Joint rotatif selon une ou plusieurs des revendications précédentes, **caractérisé en ce que** chacun desdits premiers connecteurs (7) est sensiblement constitué par un bloc en forme de disque, lesdits premiers connecteurs en forme de disque (7) étant empilés pour définir sensiblement un premier ensemble de connexion sensiblement cylindrique, agencé le long de l'axe de rotation (A) à l'intérieur de ladite cavité (5).

5. Joint rotatif selon une ou plusieurs des revendications précédentes, **caractérisé en ce que** chacun desdits deuxièmes connecteurs (8) est sensiblement en forme de disque, lesdits deuxièmes connecteurs sensiblement en forme de disque (8) étant empilés pour la définition substantielle d'un deuxième ensemble de connexion et comportant des trous axiaux respectifs qui sont mutuellement alignés afin de recevoir ledit premier ensemble de connexion, les parois extérieures (9) de chacun desdits deuxièmes connecteurs (8) étant accouplées rigidement à la surface intérieure de ladite cavité (5), à la suite d'une rotation dudit deuxième demi-joint (3) par rapport au dit premier demi-joint (2), les parois intérieures (10) de chacun desdits trous coulissant autour de la surface extérieure du premier connecteur (7) respectif pour la connexion électrique entre l'unité d'entraînement et l'élément entraîné.

6. Joint rotatif selon une ou plusieurs des revendications précédentes, **caractérisé en ce que** ledit premier demi-joint (2) et ledit deuxième demi-joint (3) sont sensiblement cylindriques, ledit deuxième demi-joint (3) étant pourvu d'un conduit axial (11) pour loger de manière coaxiale ledit premier demi-joint (2) qui est agencé en contact avec la surface latérale dudit conduit (11), ledit premier demi-joint (2) étant pourvu intérieurement de ladite cavité (5) pour loger ledit corps auxiliaire (6) pendant une rotation de l'élément entraîné par rapport à l'unité d'entraînement, autour de l'axe de rotation (A), ledit deuxième demi-joint (3) tournant autour dudit premier demi-joint (2).

7. Joint rotatif selon une ou plusieurs des revendications précédentes, **caractérisé en ce que** ledit système de canaux (4) qui peut être traversé par un fluide, choisi de préférence du type huile de transmission, comprend au moins une partie de distribution (12) et au moins une partie de retour (13), qui sont prévues le long de directions qui sont parallèles au dit axe de rotation (A), à l'intérieur dudit premier demi-joint (2), et qui sont connectées à l'unité d'entrainement, sur des côtés opposés de chacune desdites parties (12, 13) faisant face à une gorge circonférentielle (14) respective prévue le long de la surface latérale dudit conduit (11), qui est relié à l'élément entraîné, à n'importe quelle position angulaire mutuelle desdits demi-joints (2, 3), pour la liaison hydraulique entre lesdits demi-joints (2, 3) et entre l'unité d'entraînement et l'élément entraîné.
